(19) Europäisches Patentamt
European Patent Office
Office européen des brevets

(11) **EP 4 217 991 B1**

(12) **EUROPEAN PATENT SPECIFICATION**

(45) Date of publication and mention
of the grant of the patent:
**17.12.2025 Bulletin 2025/51**

(21) Application number: **21790995.1**

(22) Date of filing: **22.09.2021**

(51) International Patent Classification (IPC):
**G09B 9/058** (2006.01)

(52) Cooperative Patent Classification (CPC):
**G09B 9/058**

(86) International application number:
**PCT/IB2021/058648**

(87) International publication number:
**WO 2022/064388 (31.03.2022 Gazette 2022/13)**

(54) **A MOTORCYCLE RIDING SIMULATOR WITH GYROSCOPIC EFFECT**

MOTORRAD-FAHRSIMULATOR MIT GYROSKOPISCHEM EFFEKT

SIMULATEUR DE CONDUITE DE MOTOCYCLETTE À EFFET GYROSCOPIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2020 IT 202000022531**

(43) Date of publication of application:
**02.08.2023 Bulletin 2023/31**

(73) Proprietor: **Universita' Degli Studi di Firenze 50121 Firenze (IT)**

(72) Inventors:
• **SAVINO, Giovanni**
**50100 Firenze (IT)**
• **BERZI, Lorenzo**
**50100 Firenze (IT)**

(74) Representative: **Soldatini, Andrea**
**Società Italiana Brevetti S.p.A.**
**Corso dei Tintori, 25**
**50122 Firenze (IT)**

(56) References cited:
JP-A- H08 262 971    US-A1- 2007 281 828
US-A1- 2011 163 516    US-B1- 10 417 930

**Description**

<u>Field of the invention</u>

The present invention relates to the field of motorcycle riding simulation primarily directed to research and development purposes, especially but not exclusively with regard to vehicle safety, but also for training or simply for recreational purposes. More specifically, the invention relates to a motorcycle riding simulator with a gyroscopic oscillating station.

<u>Background of the invention</u>

Riding simulation is a fundamental tool applied for the purposes just described and requires the interaction between the human subject and a station that simulates the riding of the two-wheeled vehicle in the most realistic way possible, receiving from the subject in question the riding actions and commands, and returning to the subject the sensations correlated to the typical functional behaviour of the vehicle. However, the realism of the riding is difficult to approach due to the lack of the typical dynamic effects that are responsible for the balance during the non-rectilinear motion of single-track vehicles such as cycles and motorcycles, which in particular require high lean angles when cornering.

Various solutions based on active actuation systems have been proposed in the prior art to overcome the lack of these dynamic effects and to seek a realistic perception by the user. An example can be found in "Kovacsova et al. - Emergency braking at intersections: A motion-base motorcycle simulator study - Applied Ergonomics Volume 82, January 2020, 102970", which describes a simulator in which a motorcycle frame, supported at the base by a steerable platform capable of reproducing the lean movement (tilting sideways) is controlled in this movement by actuators that aim to provide the rider with the perception of riding a motorcycle engaged in a change of direction. Other active systems are provided in application to the steering, or to the frame itself to introduce further simulation movements in a coordinated/synchronised manner with a virtual riding scenario dynamically represented on a display (or other device that provides the user with a riding view, such as a face viewer), the whole being managed by a specially developed software control system.

Solutions of this kind are structurally and operationally very complex, raising problems of cost and reliability, imposing difficult and laborious setup operations, and moreover not achieving a satisfactory result from the point of view of responsiveness, since the calculation and actuation times, albeit short, tend to be noticeable to the user, compromising the realism of the experience. It should also be noted that the control of the active components is still linked to a modelling approach, and therefore to a simplification of the phenomenon that is intended to be simulated, which makes the occurrence of responses that are not fully realistic.

A further known simulator is described in patent publication JP3702003 (JPH08262971A). In this document, a motorcycle riding simulation system is described with a frame rotatably linked to a base so as to tilt around a lean axis. A powering system sets the front wheel into spinning, to create, with the rotation that the user transmits to the steering system through the handlebar, an effect of gyroscopic precession that seeks to promote a realistic transmission of the stimuli of movement to the user. As for the steering movement, it lacks any elastic contrast, and it is the angular position of the steering system to be detected and used as an input for the control of the simulation. This known device further comprises position constraints, also with active control, as far as the frame lean angle is concerned; the frame tilting movement also lacks any elastic contrast. These position constraints bring about, as in the already mentioned prior art, a critical factor, making the construction more complex. Notwithstanding this, the device has in any case, with regard to the tilting motion, a certain, albeit reduced, angular range of instability between the aforementioned constraints; however, in the constructive context just described, the contribution offered by the precession phenomena does not appear sufficient to ensure the stabilization of the frame, if not at the limit at the price of a strong effort of the rider, an effort that eventually precludes the exercise of a realistic control action on the steering.

<u>Summary of the invention</u>

Generally speaking, the search for a simulated riding experience that is ever closer to the real one in terms of quality and versatility, and that can be achieved as simply and cheaply as possible, encourages the development of new solutions compared to those already proposed; it is from this scenario and with these objectives that the present invention arises.

The motorcycle riding simulator with gyroscopic effect according to the present invention achieves the intended purpose through the combination of essential characteristics defined by the appended claim 1. Other important additional characteristics are the subject matter of the dependent claims.

Brief description of the drawings

The characteristics and advantages of the motorcycle riding simulator with gyroscopic effect according to the present invention will be apparent from the following description of an embodiment thereof, given by way of a non-limiting example with reference to the attached drawings in which:

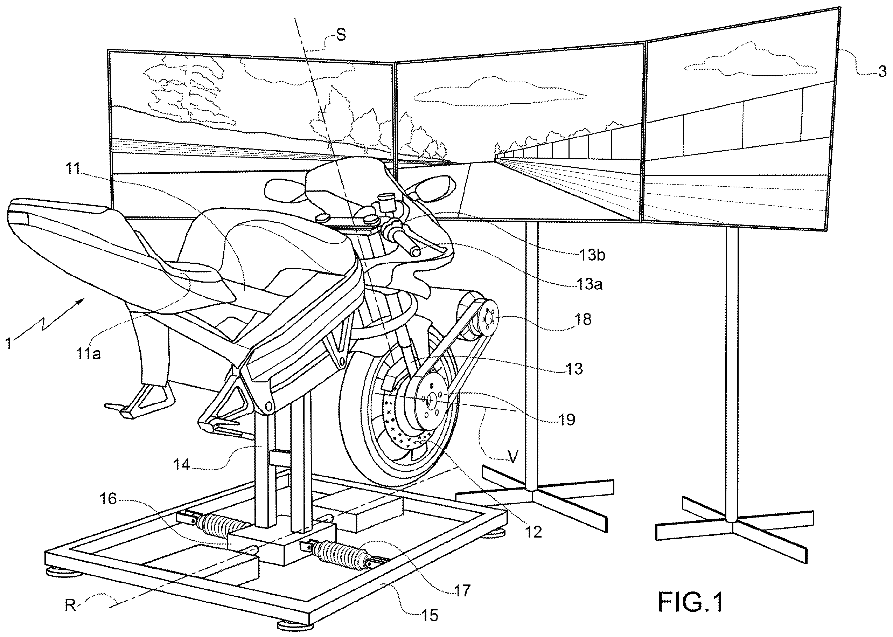

- Figure 1 schematically illustrates the oscillating riding station of a simulator according to the present invention;
- Figure 2 is a basic representation of the station in Figure 1, including a schematic representation of the user on board;
- Figure 3 shows in greater detail, through a block diagram of the components and with reference to the relative circuit configuration, the riding station and the user on board.
- Figure 4 is a high-level block diagram of the simulator as a whole, including the user, illustrating the functional model with representation of the interactions between the various blocks in terms also of the mutually exchanged fundamental quantities.

Detailed description of the invention

With reference to the above figures, a simulator according to the invention comprises three main elements, in an overall architecture which is not different from that of known simulators, comprising a riding station 1, a control unit 2, and display means such as a screen or a system of screens 3. In principle, the control unit 2, including processor means provided with suitable software, exchanges data and signals with the riding station 1 and with the display means 3, so that a virtual riding scenario is represented to the user U who is active on the riding station 1, this scenario being dynamically coordinated with the actions of the user/rider, inducing them and at the same time changing according to them (or some of them). The software programming details pertaining specifically to this interaction are not described in detail, as they involve known technology outside the scope of the present invention.

The riding station 1 is typically in the form of a motorcycle frame 11 with support means 11a for a user in a riding posture, typically a seat. Clearly, the frame lacks of the engine and of the rear wheel assembly, while it is instead provided with a real or realistic front wheel assembly comprising a front wheel 12 supported by a fork 13 with relative handlebar 13a, engaged with the frame 11 by means of a rotational link, in order to impart the steering command, through a steering joint 13b formed by a steering shaft and steering column that are coaxial on a steering axis S and provided with first elastic contrast means, in the form of a first spring-damper system 13c. The front wheel 12 can more generically be represented and realised in terms of a flywheel mass, suitably calibrated, rotating with respect to the steering system (front wheel assembly including the fork, steering arms and other suspension components) around a flywheel axis V orthogonal with the symmetry plane of the front wheel assembly and taking the shape of a hub 12a. The frame 11 is sustained by a support 14 which rises from a basement 15 to which it is hinged by means of a lean rotational joint 16 to allow a lean movement around a lean axis R corresponding to the longitudinal axis of the vehicle and which, transposed into the virtual riding environment, sets the direction of the vehicle's advancement. To control the lean movement, the joint 16 is equipped with second elastic contrast means, also in this case integrated in a second spring-damper system 17 and configured in such a way that the motorcycle simulacrum or frame has a stable position in a vertical position, or in a position close to the vertical direction (within an angular range of few degrees).

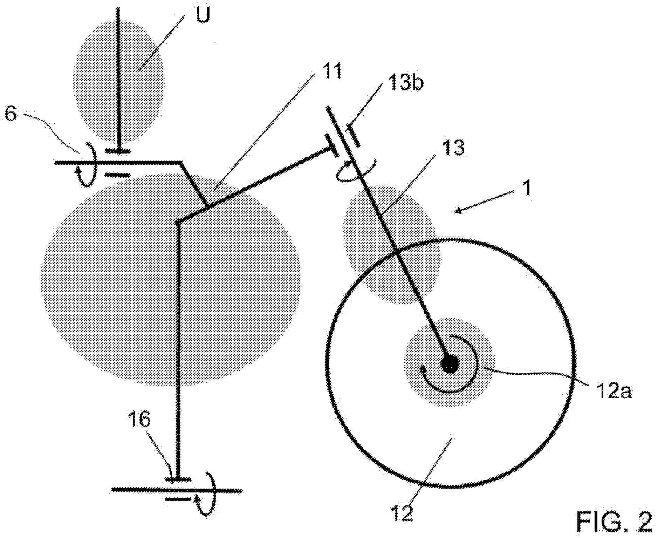

From a kinematic point of view, as can be seen in Figure 2, the structural assembly of the station and of the user can be schematised in terms of three rigid elements (frame, front wheel assembly and user), and three rotational joints, the already mentioned physical joints, that is the lean joint 16 (between frame and basement/ground) and the steering joint 13b, and a virtual joint G that represents the relative rotation movement between the user and the frame, which is typically needed during riding to shift the weight of the body with the balance variations of the vehicle and which is reproduced in the simulated riding. The angles of relative rotation around these joints can be identified respectively as the lean angle $\varphi$ of the frame 11 around the axis R, the steering angle $\delta$ and the tilting angle $\theta$ of the rider's body relative to the frame, measured on a plane orthogonal with the lean axis R.

According to an aspect of the present invention, the front wheel 12 is operatively associated with a motor means 18, mounted on the front wheel assembly, which by means of a mechanical transmission 19, for example with belt, chain, gears also with direct drive, imparts to it a spinning motion around its flywheel axis V, with controlled speed $\omega$ as will be explained shortly. A further aspect is linked the presence of a torque sensor associated with the steering joint 13b, adapted to detect the torque $\tau_\delta$ applied to the front wheel assembly through the joint. This sensor can be configured by suitably instrumenting the handlebar with strain gauges or also by mounting the handlebar on a bearing-supported system that decouples the rotation of the handlebar from the rotation of the fork, interposing between the two elements a force sensor whose straight line of action is spaced from the steering axis by a known amount (arm "b"). The steering torques are transmitted from the handlebar to the fork through the force sensor, whose signal processed and multiplied by the arm b provides a measure of the torque exerted by the user.

Other sensors that equip the riding station 1 may optionally comprise at least one among: - a lean angle $\varphi$ sensor,

associated with the base or lean joint 16; - a steering angle $\delta$ sensor provided on the steering joint 13b; - a rider's body tilting angle $\theta$ sensor, for example an optical sensor that obtains the rider's position by means of machine vision techniques (this latter sensor may be replaced by an estimate of the aforesaid tilting angle $\theta$ by means of a proportionality relationship with the lean angle $\varphi$, excluding gyroscopic effects, considering that there are no external actuators and all the other parameters are known); - a torque sensor of the torque $\tau_\varphi$ applied by the rider to the frame 11 around the lean axis R (it can be replaced, if necessary, by an estimate of this torque starting from the measurement of the lean angle, with a simple model similar to that of the dynamometer).

It should also be mentioned that, in addition to the steering command, the handlebar offers the rider the thrusting and braking commands typical of motorcycles, by means of the classic rotary grip and hand lever systems. These commands result in respective Thr, Brk signals which are transmitted from the riding station 1 to the control unit 2 for the translation thereof into values of displacement, speed and acceleration of the vehicle in the virtual environment.

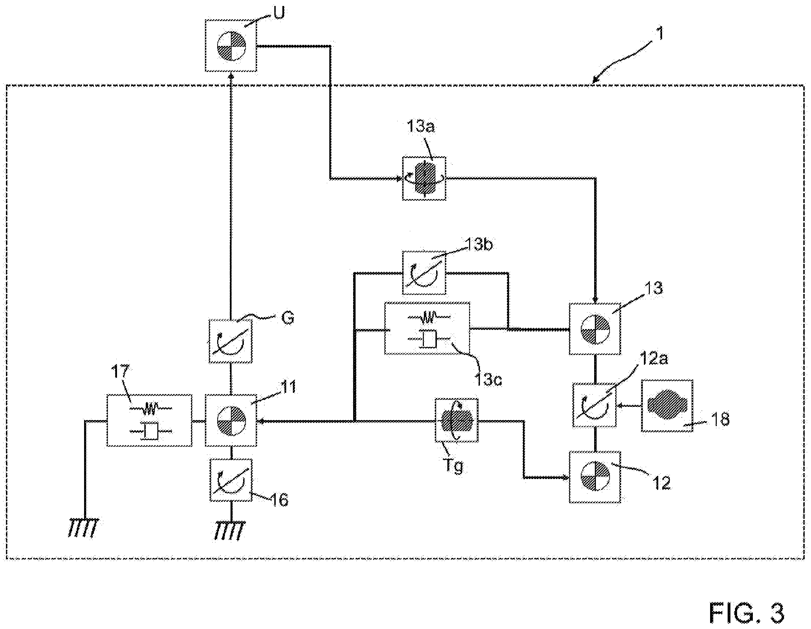

With particular reference to Figure 3, the above-mentioned components are shown by means of a more detailed circuit representation, the connections of which are not exactly represented, being however of immediate understanding to the skilled person. The interfaces through which a torque is applied are also symbolically represented here, namely the application of the steering torque by the user, symbolised within the block located on the handlebar 13a, and above all a precession torque, the effect of the rotation of the wheel 12, exchanged between the front end and the frame (block Tg). The wheel or flywheel mass, by undergoing a rotation around an axis (the steering axis S) orthogonal with the axis with respect to which it spins reacts by gyroscopic effect inducing a force moment around a third axis orthogonal with the two previous ones, and therefore in the specific case with a substantial component around the lean axis R. With the appropriate sizing of the system, the entity of the resulting displacements is made substantial, and clearly it can be properly regulated.

To summarize, the scenario of the relevant quantities in the functional behaviour of the device can be expressed by way of example by the following box, which also includes intrinsic parameters of the system (inertias), obviously variable according to the design choices.

| | |
|---|---|
| $\varphi$ | Lean angle |
| $\delta$ | Steering angle |
| $\theta$ | Tilting angle of the user's body relative to the vehicle |
| $\tau_\delta$ | Torque applied to the steering |
| $\tau_\varphi$ | Torque applied by the rider to the motorcycle frame around the lean axis |
| $I_s$ | Aggregated steering input, e.g., obtained as a linear combination of $\tau_\delta$ and $\varphi$ with coefficients $k_1$ and $k_2$ |
| $k_s, c_s$ | Elastic and damping coefficient measured on the steering axis, linked to $\tau_\delta'$ and to $\delta$ by the relationship: $\tau_\delta' = k_s \cdot \delta + c_s \cdot \dot{\delta}$ where $\tau_\delta'$ is the reaction of the spring-damper system on the steering axis, which substantially combines with the action of the user to determine the actual rotation motion of the front end. |
| $k_r, c_r$ | Elastic and damping coefficient measured on the lean axis linked to $\tau_\varphi'$ to $\varphi$ by the relationship: $\tau_\varphi' = k_r \cdot \varphi + c_r \cdot \dot{\varphi}$ where $\tau_\varphi'$ similarly to the above, is the reaction of the system on the lean axis. |
| $J_{mf}$ | Vehicle inertia around the lean axis |
| $J_{fw}$ | Inertia of the vehicle's front wheel about its rotation axis |
| $\omega$ | Rotation speed of the front wheel |
| Thr, Brk | Acceleration and braking command signals |
| X, Y | Vehicle coordinates (forward and lateral displacement) in the virtual space |

It should be noted that in possibly more advanced embodiments, and according to what can obviously be deduced by the person skilled in the art, further degrees of freedom may be introduced in the support of the station 1, with consequent simulation of the pitch and yaw movements and detection of the relative angles $\beta$, $\psi$, as well as a coordinate Z (elevation displacement) of the vehicle in the virtual space.

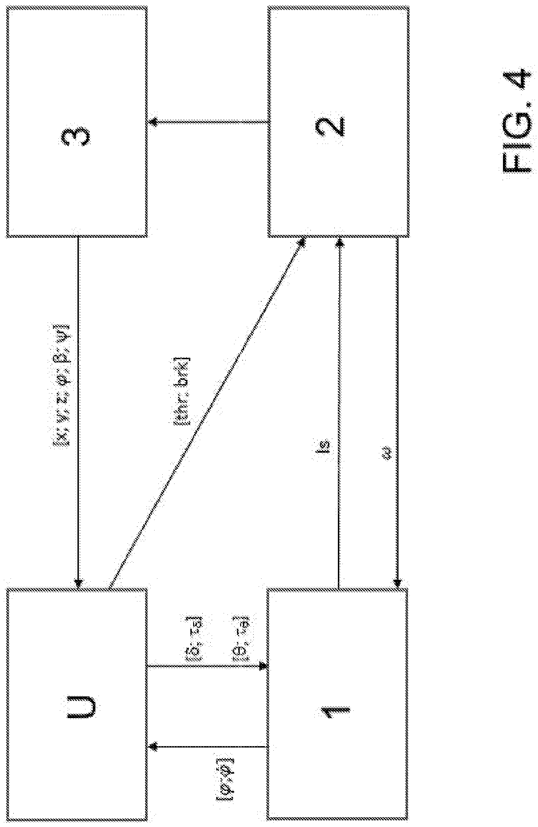

How these values/signals are exchanged between the blocks of the simulator, including the directionality of the transmission, can be deduced from the substantially self-explanatory example of Figure 4, in which the exchange between display media 3 and user U is to be understood in terms of pure visual perception, while the represented bidirectional connections between the user U and the station 1 are exchanges of physical perception and of physical intervention on the station (steering, body displacement). The remaining connection lines represent actual data/signal exchanges, including the one F between the control unit 2 and the display means 3 which represents the video signal stream F to be represented, processed as output by the unit 2 on the basis of the received data/signals and of the relative programming.

Based on the above, in the functional behaviour of the simulator the rider therefore interacts with the riding station by providing steering input (variation of the angle $\delta$) and by modifying his position (variation of the angle $\theta$) and clearly also by transmitting the forces, and more precisely the respective torques, that are necessary to produce these effects. In return, the station makes the rider feel riding sensations by means of its tilting with respect to the ground (absolute and differential variation of the angle $\varphi$), affected by the gyroscopic precession torque caused by the rotation of the front wheel. The control unit derives from the measured data the already mentioned aggregated steering input, which expresses through a synthetic quantity the combination of the inputs provided by the user in order to obtain the virtual steering of the vehicle.

Various analytical expressions can be adopted to lead to the aggregated input, depending on the dynamic behaviour to be determined, possibly according to various selectable preset programs, and based on the boundary conditions. The torque measured at the steering $\tau_\delta$ through the relative sensor is in any case to be considered a key element in whatever functional expression is chosen, combining it linearly with the lean angle and/or the steering angle and/or lean torque. The aggregated input may also be transmitted as a vector with several components.

Based on the aggregated steering input, as well as typically on the accelerator and brake inputs, the unit determines a position and a speed of the vehicle for the purpose of representation in the virtual environment, while the rotation speed $\omega$ of the wheel 12 can be varied e.g., according to laws proportional to the virtual forward speed or by maintaining constant values.

It should be noted that the aggregated steering input and the wheel speed can generally be managed independently. The steering input is what determines the riding command in the virtual world, while the angular speed of the wheel is what determines the extent of the sensory feedback to the user. The two quantities (aggregated steering input and wheel angular speed) are in practice connected only by the user-supplied steering torque input, which determines the aggregated steering input and the sensory feedback.

The result of the dynamic riding processing carried out by the control unit is delivered to the screen in terms of representation of the riding environment. In all of this, the dynamic behaviour of the riding station is essentially passive by nature, i.e., solely induced, in addition to the rider's actions, by the gyroscopic precession effect that is triggered automatically, affecting the entire vehicle and without any active control or actuation on the lean axis.

In practice, the apparatus consists in an oscillating vehicle with a gyroscopic effect due to the rotation of the front wheel, combined with an elastic response to the steering (counter-steering riding with steering torque sensor), in order to achieve a highly realistic riding perception, with a system of remarkable structural and functional simplicity.

The small movements of the frame that transmit the typical sensations of transients (variations in direction, variations in trajectory, straight-line curve transition and vice versa) are realistically perceived by the rider; and the station responds automatically, promptly and without any control system to the riding inputs provided by the user (steering angle imposed to the handlebar).

To summarize, and ultimately, the present invention is based on the intuition that riding realism is obtained by letting the user/rider control the motorcycle by means of torque inputs at the steering (in counter-steering), with the front wheel assembly linked to the frame by means of spring and damper means (in addition to possible inputs related to the lean of the simulacrum or to the position of the user's body), exploiting the rotation of the front wheel that in combination with the steering rotations commanded by the rider (and carried out in counter-steering fashion) produces torque components (effect of precession) around the lean axis of the frame, the leaning being governed passively through appropriate elastic contrast and damping means. All this is clearly unfeasible with the known configuration described for example in JP3702003, in which the rotation of the handlebar, without elastic contrast, represents the main control input, and the leaning motion, when not imposed by actuator means (active end stops), is not in fact governable by the user.

The advantages of the simulator according to the present invention over the known ones can be summarised as follows:

- lower costs;
- quickness of response;
- low complexity;
- calibration simplicity;
- reliability;
- intrinsic realistic effect, as the realism is guaranteed regardless of the simplifications adopted in the simulation model and any programming bugs;
- operation intuitiveness, and consequently:

- low familiarisation time.

Although, by way of example, reference has been made to motorcycle riding as the most typical field of application of the invention, it is clear that the principles underlying the invention can be used more generally, with obvious adaptations, in other similar fields, i.e. in which a riding dynamics similar to that of a motorcycle must be simulated, hence the cycling field generally intended and even more generally that of land or even nautical vehicles (for example watercrafts, if necessary by setting the appropriate direction of rotation of the front wheel) in which a dynamic equilibrium is achieved during cornering by means of substantial inclination angles of the vehicle.

The present invention has been described herein with reference to preferred embodiments thereof. It should be understood that there may be other embodiments that relate to the same inventive concept, within the scope of the appended claims.

**Claims**

1. A motorcycle or similar riding simulator comprising: a riding station (1) comprising a frame (11) with support means (11a) for a user in a riding posture, and ride command means comprising at least one steering command operating on a front wheel assembly (12, 13, 13a) linked with said frame (11) through a steering rotational joint (13b) along a steering axis (S) and comprising a flywheel mass (12) rotating around its own flywheel axis (V) orthogonal with said steering axis (S); dynamic display means (3) of a virtual riding environment; a control and processing unit (2) adapted to exchange data/signals with said riding station (1) and said display means (3), said control unit (2) being configured to generate said virtual environment on said display means (3) and, therein, a dynamic virtual riding representation of a motorcycle or similar vehicle based on programmed instructions and on signals retrieved from one or more sensors associated with said frame (11) and/or said front wheel assembly (12, 13, 13a), derived from the riding commands operated by the user; wherein said frame (11) of said riding station (1) is supported by a floor resting basement (15) through a lean rotational joint (16) around a lean axis (R), the simulator further comprising rotation powering means (18) for spinning said flywheel mass (12) around said flywheel axis (V) at a controlled rotation speed ($\omega$), adapted to induce, through gyroscopic effect, a moment of force around said lean axis (R), **characterized in that** the rotation of said frame (11) with respect to said basement (15) through said lean joint (16) is free from active controls apart from the controls resulting from the barycentric displacements of the user on said support means (11a), and **in that**: said steering rotational joint (13b) comprises a first spring-damper system (13c) adapted to elastically oppose the rotation of said front wheel assembly with respect to said frame (11) around said steering axis (S); said lean joint (16) comprises a second spring-damper system (17) adapted to elastically oppose the rotation of said frame (11) with respect to said basement (15) around said leans axis (R); and wherein said one or more sensors comprise at least one steering torque sensor adapted to detect a torque applied to said front wheel assembly through said steering joint, said control unit (2) being configured to process, based on at least the torque signal detected by said steering torque sensor, an aggregated steering input, and to use said aggregated steering input in the generation of said dynamic virtual riding representation.

2. The riding simulator according to claim 1, wherein said one or more sensors comprises a lean sensor adapted to detect a signal of the lean angle ($\varphi$) of said frame (11) relative to said basement (15) through said lean joint (16), said control unit being configured to retrieve said aggregated steering input on the basis of a mathematical function of said steering torque signal and said lean angle signal ($\varphi$).

3. The riding simulator according to claim 2, wherein said mathematical function comprises a linear combination of said steering torque signal and said lean angle signal ($\varphi$).

4. The riding simulator according to any one of claims 1 to 3, wherein said one or more sensors comprises at least one among: a steering angle ($\delta$) sensor associated with said steering joint (13b); a sensor of the tilting angle ($\theta$) of the body of the user relative to said frame (11); a lean torque sensor adapted to detect the torque exchanged between said frame (11) and said basement around said lean axis (R).

5. The riding simulator according to any of the previous claims, wherein said control unit (2) is configured to control said rotational speed ($\omega$) of said flywheel mass (12), through said powering means (18), so that said speed is kept constant or with variations that are proportional with an advancement speed of the vehicle in said virtual environment.

6. The riding simulator according to any of the previous claims, wherein said flywheel mass (12) is a front wheel (12) of a motorcycle vehicle.

7. The riding simulator according to any of the previous claims, wherein said powering means (18) of said flywheel mass comprise motor means (18) mounted on said front end and a mechanical transmission (19) between said motor means (18) and said flywheel mass (12).

**Patentansprüche**

1. Motorrad- oder ähnlicher Fahrsimulator, umfassend: eine Fahrstation (1), die einen Rahmen (11) mit Stützmitteln (11a) für einen Benutzer in einer Fahrhaltung umfasst, und Fahrbefehlsmittel, die mindestens einen Lenkbefehl umfassen, der auf eine Vorderradbaugruppe (12, 13, 13a) einwirkt, die über ein Lenkdrehgelenk (13b) entlang einer Lenkachse (S) mit dem Rahmen (11) verbunden ist und eine Schwungradmasse (12) umfasst, die sich um ihre eigene Schwungradachse (V) orthogonal zu der Lenkachse (S) dreht; dynamische Anzeigemittel (3) einer virtuellen Fahrumgebung; eine Steuer- und Verarbeitungseinheit (2), die zum Austausch von Daten/Signalen mit der Fahrstation (1) und den Anzeigemitteln (3) angepasst ist, wobei die Steuereinheit (2) so konfiguriert ist, dass sie die virtuelle Umgebung auf der Anzeigeeinrichtung (3) und darin eine dynamische virtuelle Fahrdarstellung eines Motorrads oder eines ähnlichen Fahrzeugs auf der Grundlage von programmierten Anweisungen und von Signalen erzeugt, die von einem oder mehreren mit dem Rahmen (11) und/oder der Vorderradbaugruppe (12, 13, 13a) verbundenen Sensoren abgerufen werden und aus den vom Benutzer ausgeführten Fahrbefehlen abgeleitet sind; wobei der Rahmen (11) der Fahrstation (1) durch ein Neigungsdrehgelenk (16) um eine Neigungsachse (R) von einem auf dem Boden ruhenden Unterbau (15) getragen wird, wobei der Simulator ferner eine Drehantriebseinrichtung (18) umfasst, um die Schwungradmasse (12) um die Schwungradachse (V) mit einer gesteuerten Drehzahl ($\omega$) zu drehen, die dazu ausgelegt ist, durch einen gyroskopischen Effekt ein Kraftmoment um die Neigungsachse (R) zu induzieren, **dadurch gekennzeichnet, dass** die Drehung des Rahmens (11) in Bezug auf den Unterbau (15) über das Neigegelenk (16) frei von aktiven Steuerungen ist, abgesehen von den Steuerungen, die sich aus den baryzentrischen Verschiebungen des Benutzers auf der Stützeinrichtung (11a) ergeben, und dass: das Lenkdrehgelenk (13b) ein erstes Feder-Dämpfer-System (13c) umfasst, das so angepasst ist, dass es der Drehung der Vorderradbaugruppe in Bezug auf den Rahmen (11) um die Lenkachse (S) elastisch entgegenwirkt; das Neigegelenk (16) ein zweites Feder-Dämpfer-System (17) umfasst, das so angepasst ist, dass es der Drehung des Rahmens (11) in Bezug auf den Unterbau (15) um die Neigeachse (R) elastisch entgegenwirkt; und wobei der eine oder die mehreren Sensoren mindestens einen Lenkdrehmomentsensor umfassen, der dazu angepasst ist, ein auf die Vorderradbaugruppe über das Lenkgelenk ausgeübtes Drehmoment zu erfassen, wobei die Steuereinheit (2) so konfiguriert ist, dass sie auf der Grundlage mindestens des vom Lenkdrehmomentsensor erfassten Drehmomentsignals einen aggregierten Lenkbefehl verarbeitet und den aggregierten Lenkbefehl zur Erzeugung der dynamischen virtuellen Fahrdarstellung verwendet.

2. Fahrsimulator nach Anspruch 1, wobei der eine oder die mehreren Sensoren einen Neigungssensor umfassen, der dazu angepasst ist, ein Signal des Neigungswinkels ($\varphi$) des Rahmens (11) relativ zu dem Unterbau (15) über das Neigungsgelenk (16) zu erfassen, wobei die Steuereinheit so konfiguriert ist, dass sie die aggregierte Lenkungseingabe auf der Grundlage einer mathematischen Funktion des Lenkdrehmomentsignals und des Neigungswinkelsignals ($\varphi$) abruft.

3. Fahrsimulator nach Anspruch 2, wobei die mathematische Funktion eine lineare Kombination des Lenkdrehmomentsignals und des Neigungswinkelsignals ($\varphi$) umfasst.

4. Fahrsimulator nach einem der Ansprüche 1 bis 3, wobei der eine oder die mehreren Sensoren mindestens einen umfassen aus: einem Lenkwinkelsensor ($\delta$), der mit dem Lenkgelenk (13b) verbunden ist; einem Sensor für den Neigungswinkel ($\theta$) des Körpers des Benutzers relativ zu dem Rahmen (11); einen Neigungsdrehmomentsensor, der dazu angepasst ist, das zwischen dem Rahmen (11) und dem Unterbau um die Neigungsachse (R) ausgetauschte Drehmoment zu erfassen.

5. Fahrsimulator nach einem der vorhergehenden Ansprüche, wobei die Steuereinheit (2) dazu konfiguriert ist, die Drehgeschwindigkeit ($\omega$) der Schwungradmasse (12) über die Antriebsmittel (18) so zu steuern, dass die Geschwindigkeit konstant gehalten wird oder mit Variationen, die proportional zur Fortbewegungsgeschwindigkeit des Fahrzeugs in der virtuellen Umgebung sind.

6. Fahrsimulator nach einem der vorhergehenden Ansprüche, wobei die Schwungradmasse (12) ein Vorderrad (12) eines Motorradfahrzeugs ist.

7. Fahrsimulator nach einem der vorhergehenden Ansprüche, wobei die Antriebsmittel (18) der Schwungradmasse an der Vorderseite montierte Motormittel (18) und ein mechanisches Getriebe (19) zwischen den Motormitteln (18) und der Schwungradmasse (12) umfassen.

**Revendications**

1. Simulateur de conduite de motocyclette ou similaire comprenant : un poste de conduite (1) comprenant un cadre (11) avec des moyens de support (11a) pour un utilisateur dans une position de conduite, et des moyens de commande de conduite comprenant au moins une commande de direction fonctionnant sur un ensemble roue avant (12, 13, 13a) relié audit cadre (11) par l'intermédiaire d'une articulation rotative de direction (13b) le long d'un axe de direction (S) et comprenant une masse de volant (12) tournant autour de son propre axe de volant (V) orthogonal audit axe de direction (S) ; des moyens d'affichage dynamique (3) d'un environnement virtuel de conduite ; une unité de commande et de traitement (2) adaptée pour échanger des données/signaux avec ledit poste de conduite (1) et lesdits moyens d'affichage (3), ladite unité de commande (2) étant configurée pour générer ledit environnement virtuel sur lesdits moyens d'affichage (3) et, dans ceux-ci, une représentation dynamique virtuelle de conduite d'une motocyclette ou d'un véhicule similaire, sur la base d'instructions programmées et de signaux récupérés à partir d'un ou de plusieurs capteurs associés audit cadre (11) et/ou audit ensemble roue avant (12, 13, 13a), dérivés des commandes de conduite manipulées par l'utilisateur ; dans lequel ledit cadre (11) dudit poste de conduite (1) est supporté par une base (15) reposant sur le sol par l'intermédiaire d'une articulation rotative d'inclinaison (16) autour d'un axe d'inclinaison (R), le simulateur comprenant en outre des moyens d'entraînement en rotation (18) permettant de faire tourner ladite masse de volant (12) autour dudit axe de volant (V) à une vitesse de rotation (ω) contrôlée, adaptés pour induire, par l'intermédiaire d'un effet gyroscopique, un moment de force autour dudit axe d'inclinaison (R), **caractérisé en ce que** la rotation dudit cadre (11) par rapport à ladite base (15) par l'intermédiaire de ladite articulation d'inclinaison (16) est exempte de commandes actives autres que les commandes résultant des déplacements barycentriques de l'utilisateur sur lesdits moyens de support (11a), **et en ce que :** ladite articulation rotative de direction (13b) comprend un premier système ressort-amortisseur (13c) adapté pour s'opposer de manière élastique à la rotation dudit ensemble roue avant par rapport audit cadre (11) autour dudit axe de direction (S) ; ladite articulation d'inclinaison (16) comprend un second système ressort-amortisseur (17) adapté pour s'opposer de manière élastique à la rotation dudit cadre (11) par rapport à ladite base (15) autour dudit axe d'inclinaison (R) ; et dans lequel ledit ou lesdits capteurs comprennent au moins un capteur de couple de direction adapté pour détecter un couple appliqué audit ensemble roue avant par l'intermédiaire de ladite articulation de direction, ladite unité de commande (2) étant configurée pour traiter, sur la base d'au moins le signal de couple détecté par ledit capteur de couple de direction, une entrée de direction agrégée, et pour utiliser ladite entrée de direction agrégée pour la génération de ladite représentation dynamique virtuelle de conduite.

2. Simulateur de conduite selon la revendication 1, dans lequel ledit ou lesdits capteurs comprennent un capteur d'inclinaison adapté pour détecter un signal de l'angle d'inclinaison (φ) dudit cadre (11) par rapport à ladite base (15) par l'intermédiaire de ladite articulation d'inclinaison (16), ladite unité de commande étant configurée pour récupérer ladite entrée de direction agrégée sur la base d'une fonction mathématique dudit signal de couple de direction et dudit signal d'angle d'inclinaison (φ).

3. Simulateur de conduite selon la revendication 2, dans lequel ladite fonction mathématique comprend une combinaison linéaire dudit signal de couple de direction et dudit signal d'angle d'inclinaison (φ).

4. Simulateur de conduite selon l'une quelconque des revendications 1 à 3, dans lequel ledit ou lesdits capteurs comprennent au moins l'un parmi : un capteur de direction (δ) associé à ladite articulation de direction (13b) ; un capteur de l'angle de basculement (θ) du corps de l'utilisateur par rapport audit cadre (11) ; un capteur de couple d'inclinaison adapté pour détecter le couple échangé entre ledit cadre (11) et ladite base autour dudit axe d'inclinaison (R).

5. Simulateur de conduite selon l'une quelconque des revendications précédentes, dans lequel ladite unité de commande (2) est configurée pour commander ladite vitesse de rotation (ω) de ladite masse de volant (12), par l'intermédiaire desdits moyens d'alimentation (18), de sorte que ladite vitesse est maintenue constante ou avec des variations qui sont proportionnelles à une vitesse d'avance du véhicule dans ledit environnement virtuel.

6. Simulateur de conduite selon l'une quelconque des revendications précédentes, dans lequel la masse de volant (12) est une roue avant (12) d'un véhicule de type motocyclette.

7. Simulateur de conduite selon l'une quelconque des revendications précédentes, dans lequel les moyens d'alimentation (18) de ladite masse de volant comprennent des moyens moteurs (18) montés sur ladite extrémité avant et une transmission mécanique (19) entre lesdits moyens moteurs (18) et ladite masse de volant (12).

EP 4 217 991 B1

S

11

1

11a

14

16

R

17

15

13b

13a

18

13

19

V

12

FIG.1

FIG. 2

FIG. 3

FIG. 4

**REFERENCES CITED IN THE DESCRIPTION**

**Patent documents cited in the description**

- JP 3702003 B

- JP H08262971 A

**Non-patent literature cited in the description**

- **KOVACSOVA et al.** Emergency braking at intersections: A motion-base motorcycle simulator study. *Applied Ergonomics*, January 2020, vol. 82, 102970